# EUROPEAN PATENT APPLICATION

(11) **EP 4 729 655 A1**
(43) Date of publication of application: **22.04.2026**
(21) Application number: 24206904.5
(22) Date of filing: 16.10.2024
(51) Int. Cl.: C25B 1/04, C25B 9/60, C25B 9/65, C25B 9/75

(54) **LAYERED BIPOLAR PLATE FOR ELECTROLYZER**

(71) Applicant: Siemens Energy Global GmbH & Co. KG, 81739 München (DE)
(72) Inventor: Satheesh, Abhiroop, 91341 Röttenbach (DE); Purschke, Nils, 12249 Berlin (DE); Kühn, Cornelius, 91097 Oberreichenbach (DE); Ghicov, Andrei, 91325 Adelsdorf (DE); Kessler, Florian, 96193 Wachenroth (DE)

(57) **Abstract**

A layered bipolar plate (208) is provided that includes a steel layer (402) and a titanium layer (404). The steel layer (402), which is configured to be exposed to water and H2, is in contact to the titanium layer (404), which is configured to be exposed to water and 02. The titanium layer has an area that is smaller than the steel layer.

## Description

Global warming has become an increasing concern, thereby making energy sources that reduce CO2 emissions more attractive. Proton exchange membrane (PEM) electrolyzer, which use electrolysis, have received attention as a means to produce Hydrogen H2, which when used as a fuel source emits no CO2 and may help address the climate crisis. Electrolysis is a widely known electro-chemical process, wherein a direct current, DC, is used to drive an otherwise nonspontaneous chemical reaction. In these processes, electrical energy converts a supply medium into an output medium, chemical energy, via electrolysis. By way of example, Hydrogen is produced as an output medium from a water H₂O supply medium with an Oxygen O₂ byproduct.

### SUMMARY

Bipolar plates separate the fluids between adjacent cells and provides electrical connections between the adjacent cells. The Bipolar plates are exposed to water+H2 on a cathode face and water+O2 on an anode face. Bipolar plates of stainless steel are susceptible to corrosion due to the exposure to water+O2 on the anode face, whereas titanium (Ti) has outstanding corrosion resistance and is lighter weight than steel. However, titanium is more expensive than stainless steel. A bipolar plate of Ti-coated stainless steel has not been cost effective and is prone to corrosion at locations where the coatings are damaged. A bonded Ti-stainless steel bipolar plate where titanium and steel are metallurgically joined via techniques such as explosion plating or roll cladding, or joined via deformation techniques such a clinching, are expensive or can have voltage drops due to poor electrical contact.

The term "perimeter" is defined herein as the outermost parts or boundary of an object. A cell frame, a bipolar plate, and a seal component each have a perimeter, a respective area can be computed by the perimeter. "Essentially" is defined herein as no more or less than a 3% difference. For example, essentially the same area is an area that has no more than a 3% change.

The term "inlet" refers to an opening configured to receive a first fluid. The term "outlet" refers to an opening configured to remove a second fluid.

Both the cell frame and the bipolar plate have an anode face and a cathode face, where the anode face is on the anode side and the cathode face is on the cathode side. Additionally, the cell frame and the bipolar plate, include a number of apertures including an anode inlet, an anode outlet, a cathode inlet, and a cathode outlet. On the anode face, the anode inlet and anode outlet are relevant while the cathode inlet and the cathode outlet are not relevant. On the cathode side, the cathode inlet and the cathode outlet are relevant while the anode inlet and anode outlet are not relevant. To simplify the description, the relevant apertures are called "inlet" and "outlet" or generically "aperture" whereas the non-relevant apertures are called "bypass inlet" and "bypass outlet." or generically a "bypass aperture."

Provided is an improved bipolar plate, which is layered, that includes a steel layer, to be exposed to water and H2, and a titanium layer, to be exposed to water and O2. The amount of titanium to form the layered-bipolar plate is decreased in comparison to known bipolar plates having two layers. The reduction of titanium can be more cost effective.

The steel layer includes a cathode face and an opposing contact face. The steel layer also includes an inlet side, an outlet side, and a pair of plate sides that oppose each other. Each of the pair of plate sides is connected to an inlet side and to an outlet side on opposite sides. The steel layer has a first perimeter that is defined by the inlet side, the outlet side, and the pair of plate sides. A first area is defined within the first perimeter. A first height is defined between the inlet side and the outlet side. A first width is defined between the pair of plate sides. The inlet side includes an inlet and a bypass aperture, and the outlet side includes an outlet and a bypass aperture.

The titanium layer includes an anode face and an opposing contact face. The titanium layer also includes an inlet side, an outlet side, and a pair of plate sides that oppose each other. Each of the pair of plate sides is connected to an inlet side and to an outlet side on opposite sides. The titanium layer has a second perimeter that is defined by the inlet side, the outlet side, and the pair of plate sides. A second area is defined with the second perimeter. A second height is defined between the inlet side and the outlet side. A second width is defined between the pair of plate sides. The inlet side includes an inlet and the outlet side includes an outlet. The inlet side and the outlet side may each include a bypass aperture.

The contact face of the steel layer is arranged to abut the contact face of the titanium layer with the inlets of the steel layer and titanium layer aligning and the outlets of the steel and titanium layer aligning. At least one contact face of the steel layer or titanium layer may include a rough surface. A rough surface, also known as a structured surface, may include patterns, ridges and grooves. It has been found that a rough surface increases electrical contact over smooth surfaces. By including a rough surface on at least one of the contact faces, a reduction in ohmic losses, between the steel layer and the titanium layer, may be achieved. While the rough surface may be applied to either the steel layer or titanium layer, it might be more cost effective to apply the rough surface to the steel layer. Knurling, which is a known technique, may be used to achieve the rough surface. The rough surface can also increase a friction between the titanium layer and the steel layer, whereby a slipping between the layers may be reduced. An improvement over the typical metallurgical or deformation connections may be achieved via the rough surface.

The second area, area of the titanium layer, is smaller than the first area, area of the steel layer. The smaller second area results in a reduction in titanium, compared to the typical bipolar plate, wherein a cost savings may be realized. The second area reduction may be achieved by various designs. For example, the second height can be shorter than the first height and/or the second width can be narrower than the first width. The titanium layer may be reduced to an area that contacts the water and O2, which is defined by the perimeter of the seal component on the cell frame. The titanium layer may exclude the bypass apertures. The second height may be between 3-9% shorter than the first height. In a particular embodiment, the second height is at least 5% shorter than the first height. In a further embodiment, the second height is at least 8% shorter than the first height. The second width may be between 3-32% narrower than the first width. In a particular embodiment, the second width is at least 5% narrower than the first width. In a further embodiment, the second width is at least 15% narrower than the first width. In a further embodiment, the width height is at least 25% narrower than the first width. The reduction of the second height and/or second width results in a second area being smaller than the first area. In an embodiment the second area is smaller than the first area by at least 20%. In a further embodiment the second area is smaller than the first area by at least 25%.

It is undesirable for fluid to be present between the titanium layer and the steel layer, a seal may be provided at the inlet and the outlet whereby leakage between the layers is avoided. The seal may be integrated into the steel layer or a separate element such as a profiled seal ring.

In an embodiment, an electrolyzer stack is provided that includes the layered bipolar plate and a cell frame. The cell frame includes a diffusion media aperture configured to house a diffusion media, a seal component, an inlet side, an outlet side and a pair of frame sides. The inlet side includes an inlet. The outlet side includes an outlet. Both the inlet side and the outlet side include a bypass aperture. The pair of frame sides are arranged opposite each other.

The cell frame may be any geometry. More common geometries used are circular or rectangular. The terms rectangular and rectangle herein includes a rectangle with rounded or smooth edges as well as right angles.

The cell frame further includes a seal component and a diffusion media aperture configured to house a diffusion media. The seal component cooperates with the bipolar plate to avoid a leakage of fluid between the cell frame and the adjacent bipolar plate. More specifically, leakage of fluid from the diffusion media aperture, from the inlet, and from the outlet is avoided. The seal component may be a groove or a raised portion, and may include polymer material such as O-rings, gaskets. or the like. The seal component encapsulates the diffusion media aperture, the inlet, and the outlet. Additionally, the seal component excludes the bypass apertures, more particularly, the seal component is arranged between each respective bypass aperture and the diffusion media aperture.

Within the electrolyzer stack, the inlets of the cell frame, titanium layer, and steel layer are aligned, whereby a passage is formed. Similarly, the outlets of the cell frame, titanium layer, and the steel layer are aligned, whereby a passage is formed. In an embodiment, for each passage, a seal is disposed between the cell frame, the steel layer, the titanium layer and the passage, whereby leakage between the steel layer and the titanium layer is avoided. The seal may be integrated as part of the steel layer or may be a separate element such as a profiled seal ring.

The profiled seal ring may be an O-ring, X-ring, lip seal or the like.

The properties, features and advantages of the invention described above, as well as the manner in which they are achieved, will be explained in more detail in connection with the figures in the following description of the example and variations thereof. The example and the corresponding variations serve to explain the invention and do not limit the invention to the combinations of features indicated therein, even with respect to functional features. Moreover, any of the features disclosed in the example below may be considered in isolation and suitably combined with the features of any of the above embodiments and their further aspects.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates a schematic view of a PEM electrolyzer.
FIG. 2 illustrates a schematic view of stack compatible with the PEM electrolyzer of FIG. 1.
FIG. 3 illustrates an embodiment of a cell frame.
FIG. 4 illustrates a schematic of a side view of an embodiment of a layered bipolar plate.
FIG. 5 illustrates a schematic view of an embodiment of a steel layer that may be used in the bipolar plate of FIG 4.
FIG. 6 illustrates a schematic view of an embodiment of a titanium layer that may be used in the bipolar plate of FIG 4.
FIG. 7 illustrates a schematic view of a cross section a partial stack.

### DETAILED DESCRIPTION

Before any embodiments of the invention are explained in detail, it is to be understood that the invention is not limited in its application to the details of construction and the arrangement of components set forth in this description or illustrated in the following drawings. The invention is capable of other embodiments and of being practiced or of being carried out in various ways. Also, it is to be understood that the phraseology and terminology used herein is for the purpose of description and should not be regarded as limiting.

Various technologies that pertain to systems and methods will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

Also, it should be understood that the words or phrases used herein should be construed broadly, unless expressly limited in some examples. For example, the terms "including," "having," and "comprising," as well as derivatives thereof, mean inclusion without limitation. The singular forms "a", "an" and "the" are intended to include the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Furthermore, while multiple embodiments or constructions may be described herein, any features, methods, steps, components, etc. described with regard to one embodiment are equally applicable to other embodiments absent a specific statement to the contrary.

Also, although the terms "first", "second", "third" and so forth may be used herein to refer to various elements, information, functions, or acts, these elements, information, functions, or acts should not be limited by these terms. Rather these numeral adjectives are used to distinguish different elements, information, functions or acts from each other. For example, a first element, information, function, or act could be termed a second element, information, function, or act, and, similarly, a second element, information, function, or act could be termed a first element, information, function, or act, without departing from the scope of the present disclosure.

In addition, the term "adjacent to" may mean that an element is relatively near to but not in contact with a further element or that the element is in contact with the further portion, unless the context clearly indicates otherwise. Further, the phrase "based on" is intended to mean "based, at least in part, on" unless explicitly stated otherwise. Terms "about" or "substantially" or like terms are intended to cover variations in a value that are within normal industry manufacturing tolerances for that dimension. If no industry standard is available, a variation of twenty percent would fall within the meaning of these terms unless otherwise stated.

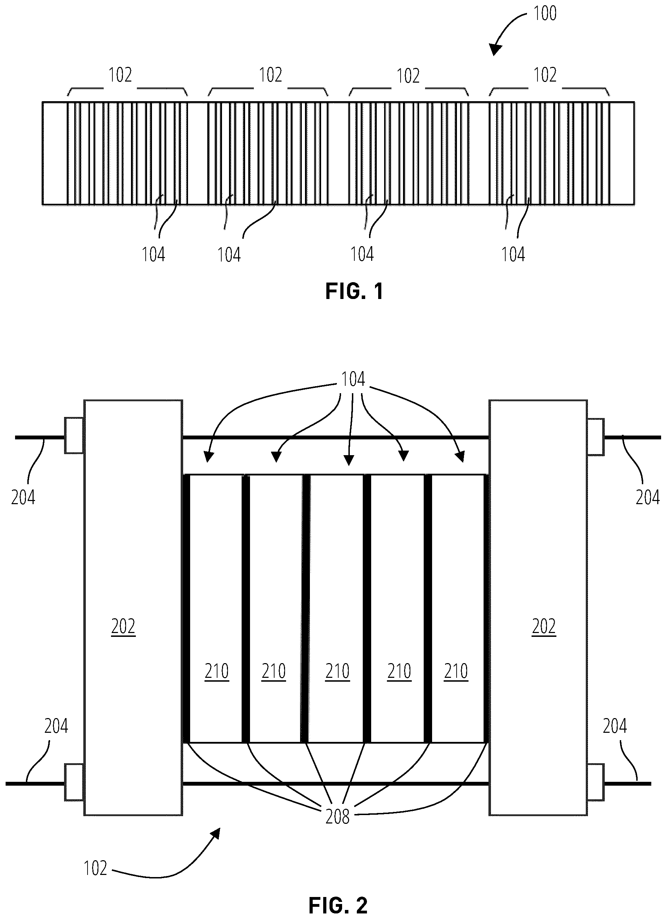

FIG. 1 illustrates a schematic view of a PEM electrolyzer 100. The PEM electrolyzer 100 includes a number of stacks 102, wherein each stack 102 includes a number of cells 104.

FIG. 2 illustrates a schematic view of a stack 102 in more detail. The stack 102 includes a number of cells 104 between endplates 202. Each cell 104 includes a membrane electrode assembly (MEA) that includes a catalyst layer (anode and cathode), and diffusion media. The diffusion media is configured to separate the output medium and the byproduct includes from the supply medium. The diffusion media includes gas diffusion layers (GDLs) that are separated from each other by proton exchange membranes (PEM). The diffusion media is arranged between the anode and cathode, wherein the anode and cathode are included on opposites faces of a bipolar plate 208 when arranged next to a cell frame 210. The bipolar plate 208 separates adjacent cells 104 and provides electrical connection between the adjacent cells 104.

Tie rods 204 and the endplates 202 compress the cell frames 210, which are typically made from a plastic polymer. A pretension is provided in the tie rod to have sufficient contact pressure between the MEA and GDLs.

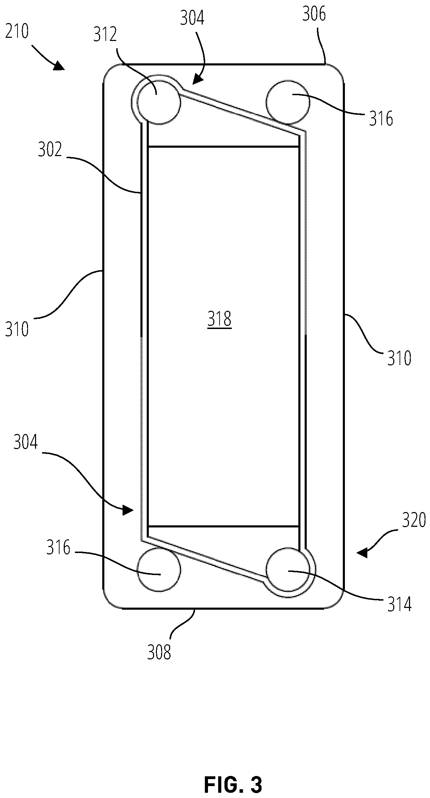

FIG. 3 illustrates the cell frame 210 according to an embodiment. The illustrated cell frame 210 is rectangular and includes a diffusion media aperture 318, an outlet side 306, an inlet side 308, a pair of frame sides 310. The outlet side 306 includes an outlet 312 and a bypass aperture 316. The inlet side 308 includes an inlet 314 and a bypass aperture 316. The frame sides 310 are formed between the outlet side 306 and the inlet side 308 on opposite sides. A perimeter 320 of the cell frame 210 is bounded by the outlet side 306, the inlet side 308, and the frame sides 310.

The cell frame 210 further includes a seal component 302 that is configured to seal the cell frame 210 to a bipolar plate in order to avoid a leakage of fluid from the diffusion media aperture 318, the outlet 312, and the inlet 314. Each side 310, 306, 308 includes a portion of the seal component 302.

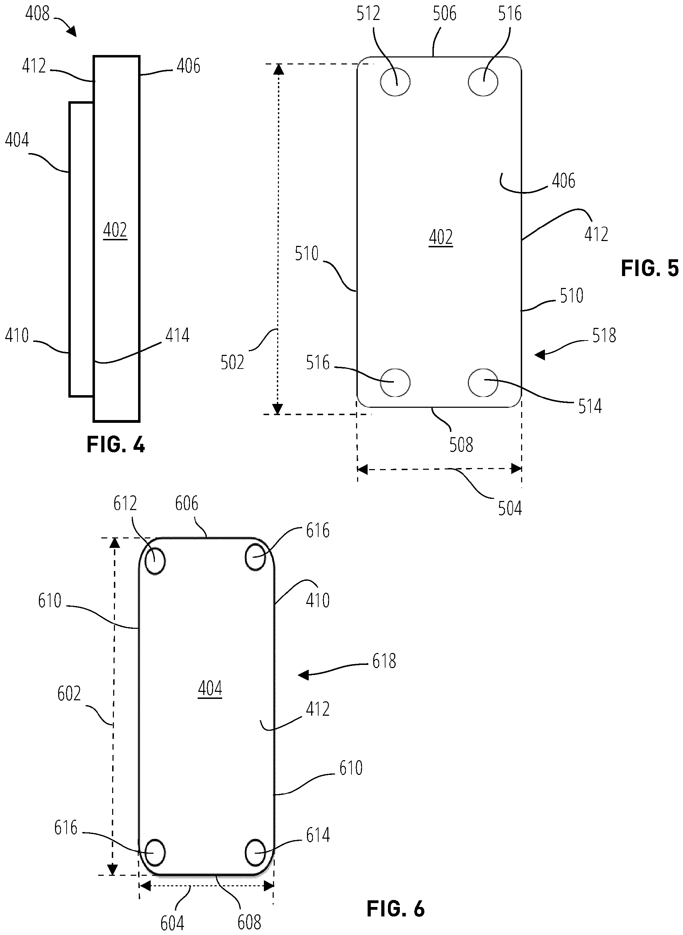

FIG. 4 illustrates a schematic side view of an embodiment of a bipolar plate. The illustrated bipolar plates 408 is a layered bipolar plate that includes a steel layer 402 and a titanium layer 404. The steel layer includes a cathode face 406 and an opposing contact face 412. The titanium layer 404 includes an anode face 410 and an opposing contact face 414. The contact face 412 of the steel layer 402 abuts the contact face 414 of the titanium layer 404. The steel layer and the titanium layer each include an inlet side comprising an inlet configured to receive a first fluid and an outlet side comprising an outlet configured for removing a second fluid. The inlets of the layers are aligned and the outlets of the layers are aligned.

FIG. 5 illustrates a schematic front view of the steel layer 402 that is compatible with the bipolar plate 208 of FIG. 4. The steel layer 402 includes an outlet 512, an inlet 514, and bypass apertures 516, which are arranged to be aligned with the same features (outlet 312, inlet 314, and bypass apertures 316) of the cell frame 210 of FIG. 3. The outlet 512 is arranged on an outlet side 506, the inlet 514 is arranged on the inlet side 508, and a bypass aperture 516 is arranged on both the outlet side 506 and the inlet side 508. The outlet side 506 opposes the inlet side 508. The steel layer 402 also includes a pair of plate sides 510, which are arranged opposite of each other. Each of the pair of plate sides 510 connects to the outlet side 506 and connects to the inlet side 508, wherein the steel layer 402 is rectangular.

A perimeter 518 of the steel layer 402 is defined by the outlet side 506, the inlet side 508, and the plate sides 510. A height 502 is defined as the distance between the outlet side 506 and the inlet side 508. A width 504 is defined as the distance between the plate sides 510.

FIG. 6 illustrates a schematic front view of the titanium layer 404 that is compatible with the bipolar plate 208 of FIG. 4. The titanium layer 404 includes an outlet 612, an inlet 614, and bypass apertures 616, which are arranged to be aligned with the same features (outlet 312, inlet 314, and bypass apertures 316) of the cell frame 210 of FIG. 3 and to be aligned with the same features (outlet 512, inlet 514, and bypass apertures 516) of the steel layer 402 of FIG. 5. The outlet 612 is arranged on an outlet side 606, the inlet 614 is arranged on the inlet side 608, and a bypass aperture 616 is arranged on both the outlet side 606 and the inlet side 608. The outlet side 606 opposes the inlet side 608. The titanium layer 404 also includes a pair of plate sides 610, which are arranged opposite of each other. Each of the pair of plate sides 610 connects to the outlet side 606 and connects to the inlet side 608, wherein the titanium layer 404 is rectangular.

A perimeter 618 of the titanium layer 404 is defined by the outlet side 606, the inlet side 608, and the plate sides 610. A height 602 is defined as the distance between the outlet side 606 and the inlet side 608. A width 604 is defined as the distance between the plate sides 610.

The height 602 and the width 604 of the illustrated titanium layer 404 is less than the height 502 and the width 504 of the illustrated steel layer 402.

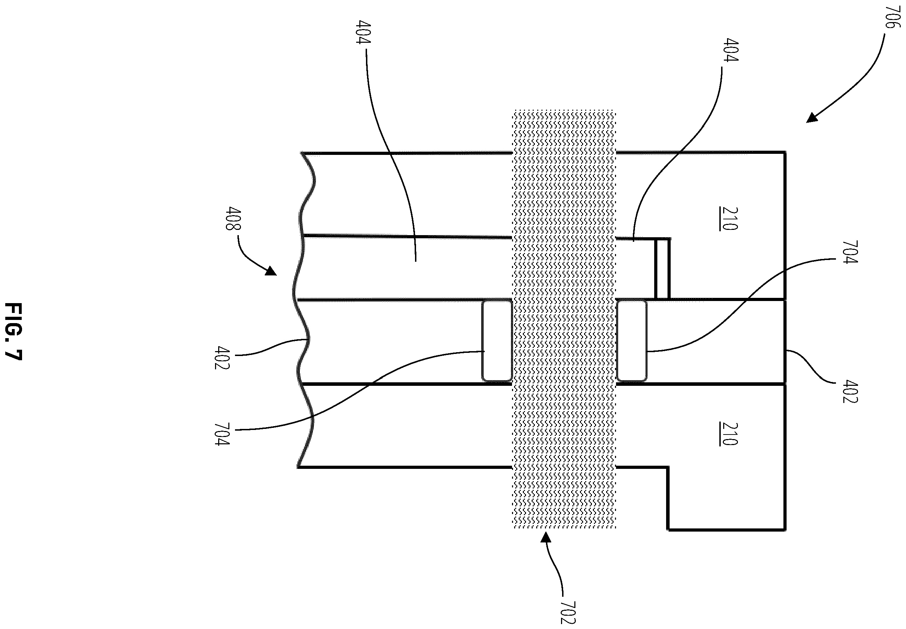

FIG. 7 illustrates a schematic view of a cross section a partial stack 706. The partial stack includes a bipolar plate 408 with the titanium layer 404 and the steel layer 402. Cell frames 210 are on each side of the bipolar plate 408. A passage 702 extends through the cell frames 210, the titanium layer 404 and the steel layer 402. The passage 702 may be an inlet where the inlets of the cell frames 210, titanium layer 404 and the steel layer 402 are aligned to form the passage 702, or the passage 702 may be an outlet where the outlets of the cell frames 210, titanium layer 404 and the steel layer 402 are aligned to form the passage 702.

A seal 704 is disposed between the cell frame (210), the steel layer (402), the titanium layer (512) and the second passage whereby leakage between the steel layer and the titanium layer is avoided.

Although an exemplary embodiment of the present disclosure has been described in detail, those skilled in the art will understand that various changes, substitutions, variations, and improvements disclosed herein may be made without departing from the spirit and scope of the disclosure in its broadest form.

Furthermore, illustrations with rounded corners may be squared or vice versa. The illustrated steel layer 402 and illustrated titanium layer 404 are rounded rectangles and each include the inlet, the outlet, and the bypass apertures; however, the layers may be different shapes such as circular or the layers may have different shapes from each other. For example, the steel layer 402 can essentially have the shape in size of the perimeter of cell frame 210 while the titanium layer may have the shape and size of the perimeter of the seal component 302 and exclude a bypass aperture.

None of the description in the present application should be read as implying that any particular element, step, act, or function is an essential element, which must be included in the claim scope: the scope of patented subject matter is defined only by the allowed claims. Moreover, none of these claims are intended to invoke a means plus function claim construction unless the exact words "means for" are followed by a participle.

## Claims

1. A bipolar plate (408) comprising:
a steel layer (402) including a cathode face (406) and an opposing contact face (412), an inlet side (506), an outlet side (508), and a pair of plate sides (510) that oppose each other, the inlet side (506) includes an inlet (512) and a bypass aperture (516), the outlet side (508) includes an outlet (516) and a bypass aperture (516), each of the pair of plate sides (510) is connected to opposite ends of the inlet side (506) and to the outlet side (508), wherein the steel layer has a first perimeter that is defined by the inlet side (506), outlet side (508), and the pair of plate sides (510), wherein a first area is defined within the second perimeter (518), wherein a first height (502) is defined between the inlet side (506) and the outlet side (508), and wherein a first width (504) is defined between the pair of plate sides (510); and
a titanium layer (404) including an anode face (410) and an opposing contact face (414), an inlet side (606), an outlet side (508), and a pair of plate sides (610) that oppose each other, the inlet side (606) includes an inlet (512) and the outlet side (608) includes an outlet (616), wherein each of the pair of plate sides (510) is connected to opposite ends of the inlet side (506) and to the outlet side (508), wherein the titanium layer (404) has a second perimeter (618) that is defined by the inlet side (606), the outlet side (608), the pair of plate sides (610), wherein a second area is defined within the second perimeter (618), wherein a second height (602) is defined between the inlet side (606) and the outlet side (608), and a second width (604) defined between the pair of plate sides (610),
wherein the contact face (412) of the steel layer (402) is arranged on the contact face (414) of the titanium layer (404),
wherein the inlet (512) of the steel layer (402) aligns with the inlet (612) of the titanium layer (404),
wherein the outlet (516) of the steel layer (402) aligns with the outlet (516) of the titanium layer (404), and
wherein the second area is smaller than the first area.

2. The bipolar plate (408) of claim 1,
wherein the second height (602) is at least 5% shorter than the first height (502).

3. The bipolar plate (408) of claim 1 or 2,
wherein the second width (604) is at least 5% narrower than the first width (604).

4. The bipolar plate (408) of any one of claims 1 to 3,
wherein the second area is smaller than the first area by at least 20%.

5. The bipolar plate (408) of any one of claims 1 to 4,
wherein at least the contact face (412, 414) of the steel layer (402) or the titanium layer (404) includes a rough surface to reduce ohmic loss between the steel layer (402) and the titanium layer (404).

6. The bipolar plate (408) of claim 5,
wherein the contact face (412) of the steel layer includes a knurled surface as the rough surface.

7. The bipolar plate (408) of claim 5,
wherein the contact face (412) of the titanium layer includes a knurled surface as the rough surface.

8. The bipolar plate (408) of any one of claims 3 to 5,
wherein the rough surface increases a friction between the titanium layer and the steel layer, whereby reducing a slipping between the layers.

9. The bipolar plate (408) of any one of claims 1 to 8,
wherein the steel layer (402) layer comprises an integrated seal formed at the inlet (512) and at the outlet (514), whereby the seal (704) titanium layer (404) and the steel layer (402) are sealed together to avoid fluid between the layers.

10. An electrolyzer stack arrangement comprising:
the bipolar plate (408) of claim 1,
a cell frame (210) comprising,
a diffusion media aperture (318) configured to house a diffusion media,
a seal component (302) cooperating with the bipolar plate to avoid a leakage of fluid between the cell frame and the bipolar plate,
an inlet side (306) comprising an inlet (312) and a bypass aperture (316),
an outlet side (308) comprising an outlet (314) and a bypass aperture (316), and
a pair of frame sides (310) arranged opposite each other, each of the pair of frame side (310) connected to an inlet side and to an outlet side;
a first passage (702) is formed by an alignment of the inlet (312) of the cell frame (210) with the inlet (512) of the steel layer (402) and with the inlet of the titanium layer (512);
a first seal (704) is disposed between the cell frame (210), the steel layer (402), the titanium layer (512) and the first passage (702) whereby leakage between the steel layer and the titanium layer is avoided;
a second passage (702) is formed by an alignment of the outlet (314) of the cell frame (210) with the outlet (514) of the steel layer (402) and with the outlet of the titanium layer (514); and
a second seal (704) is disposed between the cell frame (210), the steel layer (402), the titanium layer (512) and the second passage whereby leakage between the steel layer and the titanium layer is avoided.

11. The electrolyzer stack arrangement of claim 10,
wherein the seal is integrated with the steal layer.

12. The electrolyzer stack arrangement of claim 10,
wherein the seal is a profiled seal ring.
